# FASCICULE DE BREVET EUROPEEN

(11) **EP 1 088 236 B1**
(45) Date de publication et mention de la délivrance du brevet: **25.02.2004**
(21) Numéro de dépôt: 00920803.4
(22) Date de dépôt: 14.04.2000
(51) Int. Cl.: G01P 3/44, F16C 19/52

(54) **ROULEMENT A CODEUR INCORPORE**
LAGER MIT INTEGRIERTEM KODIERER
BALL BEARING WITH INCORPORATED ENCODER

(30) Priorité: 14.04.1999 FR 9904671
(43) Date de publication de la demande: 04.04.2001
(73) Titulaire: SNR ROULEMENTS, 74010 Annecy Cédex (FR)
(72) Inventeur: NICOT, Christophe, F-74330 Epagny (FR)
(74) Mandataire: Geismar, Thierry
(86) Numéro de dépôt international: PCT/FR2000/000975
(87) Numéro de publication internationale: WO 2000/062080

(56) Documents cités:
- EP-A- 0 250 275
- EP-A- 0 326 454
- EP-A- 0 395 892
- EP-A- 0 453 331
- DE-A- 4 228 988
- DE-U- 9 117 193
- DE-U- 9 307 156

## Description

L'invention vise le domaine des roulements instrumentés.

Elle concerne plus particulièrement un roulement à codeur incorporé, où le codeur est un moyen annulaire générateur d'impulsions électromagnétiques.

Elle concerne également un ensemble comprenant un tel roulement, et un capteur, où le capteur est un dispositif de détection des impulsions générées par le codeur.

Elle concerne également un système de direction d'un véhicule, comprenant un roulement ou un ensemble tels que mentionnés ci-dessus.

Un tel roulement est destiné à permettre d'une part la rotation d'un organe tournant par rapport à un organe fixe, et d'autre part la détection d'une position ou d'une vitesse angulaire ou d'une fonction de celles-ci.

Un tel roulement trouve son application dans les systèmes de direction pour véhicule. De manière classique, un tel système comprend un arbre de direction monté en rotation dans une colonne de direction, ainsi qu'un boîtier de crémaillère, la colonne et le boîtier de crémaillère étant fixes en rotation par rapport à un châssis du véhicule.

Le roulement ou l'ensemble peuvent être interposé entre l'arbre et la colonne, ou encore entre l'arbre et le boîtier de crémaillère.

On connaît déjà des roulements du type comprenant une bague fixe, une bague tournante et des corps roulants entre elles, auquel est incorporé un codeur.

Dans la plupart des réalisations, le roulement incorpore des moyens d'étanchéité, ceux-ci étant mis à profit pour supporter le codeur.

Citons le document FR-2 717 266, issu de la demanderesse, qui décrit un dispositif de détection de la vitesse de rotation d'un palier de roulement, qui possède un élément codeur solidaire de la partie tournante du palier.

Dans ce dispositif, l'élément codeur est associé au joint d'étanchéité du roulement.

Pour certaines applications, il n'est pas nécessaire d'avoir des moyens d'étanchéité, et la longueur axiale du roulement doit être limitée, la limitation de l'encombrement du roulement étant alors une contrainte de conception forte.

Parmi des applications de ce type, citons celle correspondant à un boîtier de crémaillère d'un système de direction.

Le document EP-856 720 décrit un capteur angulaire de braquage pour un mécanisme de direction, ce capteur comportant un aimant disposé à l'extrémité d'un arbre de direction au voisinage duquel se trouve un capteur fixe.

Dans ce cas, la structure proposée, qui permet la lecture d'une position angulaire, est tout à fait différente de celles proposant d'intégrer un codeur à un roulement.

Cette réalisation présente de nombreux inconvénients.

D'une part, elle impose de revoir la conception du support du capteur, en l'occurrence la crémaillère, afin de libérer la place nécessaire à la disposition du capteur.

D'autre part, la disposition du capteur en extrémité d'arbre l'expose aux agressions du milieu ambiant, telles que les projections de poussières, de graviers ou de boue.

Le document EP-326 454, issu de la demanderesse, décrit un montage de palier à roulement avec dispositif capteur du type comprenant une bague fixe, une bague tournante, un élément codeur disposé dans une rainure circulaire portée par la face d'un disque tournant devant un élément capteur, qui est solidaire en rotation de la bague tournante et un élément capteur fixé sur la face d'un autre disque fixé qui est solidaire de la bague fixe, dans lequel l'un ou l'autre des éléments codeur ou capteur se prolonge axialement par un moyeu à portée cylindrique disposé axialement au roulement.

Ce montage, relativement encombrant et fragile, donne entière satisfaction dans la plupart des applications, mais présente un encombrement important qui rend son utilisation impossible dans les applications où le problème du manque de place ne peut être résolu qu'en modifiant les organes environnants.

Par ailleurs, ce montage comporte un grand nombre de pièces distinctes et présente une résistance interdisant son utilisation dans des applications où les contraintes dues aux efforts mécaniques et à la corrosion par le milieu environnant sont importantes.

L'invention vise à pallier ces inconvénients, en proposant un roulement compact et robuste, permettant la détection d'informations, par exemple relatives à sa position ou sa vitesse angulaire à l'aide de moyens technologiques modernes, tout en permettant d'éviter la modification des organes mécaniques environnants.

A cet effet, un premier objet de l'invention est un roulement à codeur incorporé comprenant :
- une bague fixe, une bague tournante destinée à être montée sur un organe tournant, et des corps roulants entre elles ; et
- un codeur sous la forme d'un moyen annulaire générateur d'impulsions électromagnétiques ; caractérisé en ce qu'il comprend en outre une armature réalisée dans un matériau ferromagnétique cette armature formant d'une part support du codeur et d'autre part moyen de liaison rigide entre l'organe tournant et la bague tournante, la bague tournante étant emmanchée sur ce moyen, lequel est destiné à être interposé entre l'organe tournant et la bague tournante.

Ce roulement, pourvu d'un codeur, présente l'avantage d'être aussi peu encombrant qu'un roulement sans codeur, et résout notamment le problème de l'instrumentation des roulements étroits ou sans étanchéité sans recourir à des modifications des bagues des roulements.

Il présente en outre un comportement mécanique qui autorise son utilisation dans des applications où la rigidité est un critère de choix ; par ailleurs sa durée de vie est sensiblement identique à celle d'un roulement classique non instrumenté.

Dans un mode de réalisation, l'armature comporte une partie axiale cylindrique et une partie radiale annulaire, la bague tournante étant emmanchée sur la partie axiale destinée elle-même à être emmanchée sur l'organe tournant, la bague tournante venant contre la partie radiale, sur laquelle est fixé à l'opposé le codeur.

Un tel roulement peut en outre être dépourvu de moyens d'étanchéité ou de moyens support de moyens d'étanchéité.

Dans une réalisation, la bague tournante du roulement est associée à l'armature par emmanchement à force et/ou par sertissage, encliquetage, collage, soudure, ou analogue.

Elle peut être par exemple réalisée par pliage d'une tôle à angle droit.

Dans une réalisation, une dimension axiale de la partie axiale de l'armature est sensiblement égale à une dimension axiale de la bague tournante du roulement.

Tandis qu'une dimension radiale de la partie radiale de l'armature est sensiblement supérieure à une dimension radiale de la bague tournante.

Selon une caractéristique, le codeur est une pièce annulaire réalisée dans un matériau synthétique chargé de particules de ferrite, et formé d'une pluralité de domaines contigus à direction d'aimantation inversée d'un domaine donné par rapport aux deux domaines qui lui sont contigus.

Le codeur peut être fixé à l'armature par surmoulage.

Par exemple, le codeur s'étend sur une face de la partie radiale de l'armature, opposée à la bague tournante.

Selon un mode de réalisation, le roulement ne comporte pas de capteur ou de support de capteur intégré, le capteur se présentant sous la forme d'un dispositif de détection des impulsions générées par le codeur, le capteur étant dissocié structurellement du roulement.

Le roulement peut comporter des moyens intégrés de positionnement d'un capteur, lequel se présente sous la forme d'un dispositif de détection des impulsions générées par le codeur, ces moyens étant portés par la bague fixe.

Dans une réalisation, les moyens de positionnement du capteur se présentent sous la forme d'un anneau emmanché dans la bague fixe du roulement.

Ces moyens de positionnement du capteur peuvent comprendre des moyens d'appui du capteur et/ou des moyens d'encliquetage du capteur.

Le roulement peut en outre comprendre un capteur se présentant sous la forme d'un dispositif de détection des impulsions générées par le codeur, et des moyens de support intégrés, du capteur.

Ce capteur peut être associé à la bague fixe par l'intermédiaire d'une deuxième armature, formant d'une part moyens de support du capteur, et d'autre part moyen de liaison rigide entre la bague fixe et un organe fixe.

Selon un mode de réalisation, la deuxième armature comporte une partie axiale cylindrique et une partie radiale annulaire, la partie axiale étant d'une part emmanchée sur la bague fixe, et d'autre part destinée à être emmanchée sur l'organe fixe, la bague fixe venant contre la partie radiale, sur laquelle est fixé à l'opposé le capteur.

Par exemple, la deuxième armature est associée à la bague fixe par emmanchement à force et/ou par sertissage, encliquetage, collage, soudure, ou analogue.

Selon une caractéristique, le capteur comprend au moins un élément sensible, par exemple une pluralité d'éléments sensibles alignés, disposés en regard du codeur, choisis dans le groupe comprenant les sondes à effet Hall, les magnétorésistances.

Un autre objet de l'invention est un ensemble comprenant un roulement et un capteur tels que décrits ci-dessus, le capteur étant porté par un organe fixe.

Par exemple, le capteur est en appui sur les moyens d'appui et/ou encliqueté sur les moyens d'encliquetage.

Un autre objet de l'invention est un système de direction d'un véhicule, comprenant un arbre de direction, une colonne de direction et éventuellement un boîtier de crémaillère, et un roulement selon ou un ensemble tels que décrits ci-dessus, interposé entre l'arbre de direction et la colonne de direction, ou entre l'arbre de direction et le boîtier de crémaillère.

D'autres objets et avantages de l'invention apparaîtront à la lumière de la description qui va suivre, faite en référence aux dessins annexés, dans lesquels :
- La figure 1 est une vue en coupe transversale partielle d'un roulement selon l'invention ;
- La figure 2 est une vue similaire à la figure 1, dans une variante de réalisation, où est prévue une deuxième armature ;
- La figure 3 est une vue similaire aux figures précédentes, dans une autre variante de réalisation, où est prévu un anneau formant moyens d'appui pour un capteur ;
- La figure 4 est une vue similaire à la figure 3, où est représenté le capteur ;
- La figure 5 est une vue similaire à la figure 3, où est prévue sur l'anneau une lèvre formant moyen d'encliquetage du capteur ;
- La figure 6 est une vue similaire à la figure 5, où est représenté le capteur ; et
- La figure 7 est une vue en coupe transversale partielle d'un roulement selon l'invention, appliqué à un boîtier de crémaillère d'un système de direction d'un véhicule.

Sur les figures est représenté un axe X longitudinal, sensiblement confondu avec l'axe de rotation du roulement.

Les termes « axial », « longitudinal », « avant » et « arrière » sont définis par rapport à cet axe.

Une direction radiale ou transversale est définie dans un plan perpendiculaire à l'axe X longitudinal.

Une localisation intérieure est située à proximité de l'axe X, tandis qu'une localisation extérieure est située à distance de l'axe X.

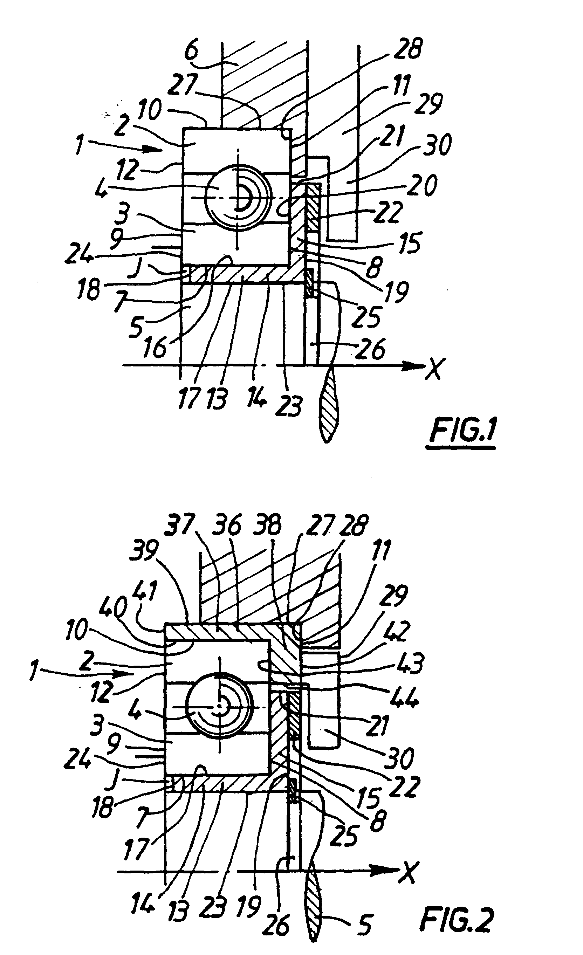

Un roulement 1, présenté sur la figure 1 comporte une bague fixe 2, une bague tournante 3 et des éléments roulants 4 disposés entre celles-ci.

Le roulement 1 est destiné à être interposé entre un organe tournant 5 et un organe fixe 6 pour permettre la rotation de l'organe tournant 5 par rapport à l'organe fixe 6.

Dans le cas d'un arbre entraîné en rotation par rapport à un carter, on appellera « arbre » 6 l'organe tournant et « carter » 7 l'organe fixe, pour plus de commodité.

La bague tournante 3 du roulement est alors la bague intérieure 3, et la bague fixe 2 la bague extérieure 2, cette configuration étant celle choisie pour la présente description.

L'invention s'applique aussi au cas inverse, où la bague intérieure du roulement est fixe tandis que la bague extérieure est tournante.

De manière classique, la bague intérieure 3 possède un alésage 7 et deux faces latérales respectivement avant 8 et arrière 9, tandis que la bague extérieure 2 possède une surface externe 10 et deux faces latérales, respectivement avant 11 et arrière 12.

La bague intérieure 3 du roulement est associée à une armature 13 rigide monobloc comprenant une partie axiale 14 cylindrique et une partie radiale 15 annulaire saillant vers l'extérieur, la section transversale de cette armature étant sensiblement en forme de L.

La partie axiale 14 comprend une face externe 16, une face interne 17 et une extrémité axiale 18 libre, tandis que la partie radiale 15 comprend une paroi avant 19, une paroi arrière 20 ainsi qu'une circonférence 21 libre.

Cette armature 13 est réalisée de préférence dans un matériau ferromagnétique, par usinage ou emboutissage.

Un codeur 22, de forme annulaire, est fixé sur la paroi avant 19 de la partie radiale 15 de l'armature 13, en s'étendant radialement contre cette dernière. Un tel codeur 22 peut être réalisé à partir d'un matériau synthétique tel qu'un polymère ou un élastomère, chargé en particules de ferrite.

Le codeur 22 peut être fixé à l'armature 13 par collage ou par surmoulage. Dans un mode de réalisation, le codeur 22 possède une pluralité de domaines contigus, chaque domaine ayant une polarité inversée par rapport aux deux domaines qui lui sont contigus.

La réalisation d'un tel codeur 22 est connue en soi et ne sera pas abordée plus en détail ci-après.

L'association de la bague intérieure 3 et de l'armature 13 comprend une phase d'emmanchement à force de la bague intérieure 3 du roulement 1 sur la partie axiale 14 de l'armature pour faire coopérer l'alésage 7 de la bague intérieure 3 avec la face externe 16 de la partie axiale 14.

Afin d'éviter qu'en cours d'utilisation la bague intérieure 3 et l'armature 13 ne se dissocient, l'association peut comprendre en outre une phase de sertissage qui consiste à déformer vers l'extérieur l'extrémité axiale 18 de l'armature 13 en une pluralité de points, par exemple en trois points disposés à 120°.

Dans d'autres réalisations, la bague intérieure 3 et l'armature 13 peuvent être collées, soudées, encliquetées, ou associées par des moyens analogues.

Une fois la bague intérieure 3 emmanchée sur la partie axiale 14 de l'armature 13, la face avant 8 de la bague intérieure 3 est en appui contre la paroi arrière 20 de la partie radiale 15.

L'extrémité axiale 18 de la partie axiale 14 est alors en retrait par rapport à la face arrière 9 de la bague intérieure 3. Est ainsi défini un jeu J entre l'extrémité axiale 18 de la partie axiale 14 et la face arrière 9 de la bague intérieure 3.

Un avantage de cet emmanchement est qu'il permet de rectifier la conicité de fabrication de la partie radiale 15 de l'armature 13, et ainsi assurer une rotation sensiblement plane du codeur 22 en cours d'utilisation, et ce en toutes circonstances.

Le roulement 1 est monté sur l'arbre 5 comme suit.

L'armature 13 est emmanchée sur une surface extérieure 23 de l'arbre, de sorte que la face interne 17 de la partie axiale 14 de l'armature 13 et la surface extérieure 23 de l'arbre 5 coopèrent, et que la face arrière 9 de la bague intérieure 3 soit en appui contre un épaulement 24 de l'arbre 5.

Cet appui est réalisé du fait de l'existence du jeu J entre l'extrémité axiale 18 de la partie axiale 14 et la face arrière 9 de la bague intérieure 3.

Un anneau d'arrêt 25, tel qu'un circlips, est alors inséré dans une gorge 26 prévue dans l'arbre 5, cet anneau d'arrêt 25 étant en contact avec la paroi avant 19 de la partie radiale 15 de l'armature 13, et assurant le maintien en position sur l'arbre 5 de cette dernière.

L'ensemble comprenant arbre 5 et roulement 1 est alors inséré dans le carter 6, la bague extérieure 2 étant emmanchée dans un réceptacle 27 de forme sensiblement complémentaire de celle-ci, la face avant 11 de la bague extérieure 2 étant alors en appui contre une face d'appui 28 radiale du réceptacle 27.

Enfin, un capteur 29 est fixé au carter 6 par vissage, encliquetage ou analogue, une partie de lecture 30 de ce capteur 29 étant disposée en regard du codeur 22.

Au moins un, et par exemple une pluralité d'éléments de lecture sont prévus dans la partie de lecture 30, ces éléments étant aptes à lire les impulsions électromagnétiques émises par le codeur 22.

Le capteur 29 transmet alors les informations issues de cette lecture à des moyens de traitement du signal pour en déduire la position angulaire du codeur 22, et partant, de la bague intérieure 3 du roulement 1 par rapport à sa bague extérieure 2, ou sa vitesse angulaire, ou encore une fonction de la position angulaire ou de la vitesse angulaire.

Cette conception de roulement présente un certain nombre d'avantages.

La rigidité de l'armature et son montage serré sur l'arbre 5 lui permet de suppléer la bague tournante 3.

L'armature 13 est réalisée par exemple en acier inoxydable qui, outre sa rigidité, permet d'éviter l'effet de pile entre le roulement, notamment la bague tournante 3, et les organes environnants, notamment l'arbre 5, en cours de fonctionnement.

L'armature 13 absorbe à la fois des efforts mécaniques entre l'arbre 5 et la bague tournante 3, et les efforts dus à la corrosion de l'arbre 5 et/ou de la bague tournante 3.

L'armature 13 est réalisée dans un matériau ferromagnétique générant un champ électromagnétique qui s'additionne à celui généré par le codeur 22 : c'est « l'effet miroir ».

Cet effet miroir permet de diminuer l'épaisseur du codeur 22 tout en conservant un champ magnétique suffisamment puissant pour être détecté par un capteur placé à distance du codeur 22.

L'effet miroir permet donc de diminuer l'épaisseur du roulement, les dimensions axiales du roulement avec ou sans codeur étant sensiblement identiques.

Le mode de réalisation qui vient d'être décrit peut être appliqué seul ou en combinaison avec l'une des variantes qui vont être décrites à présent.

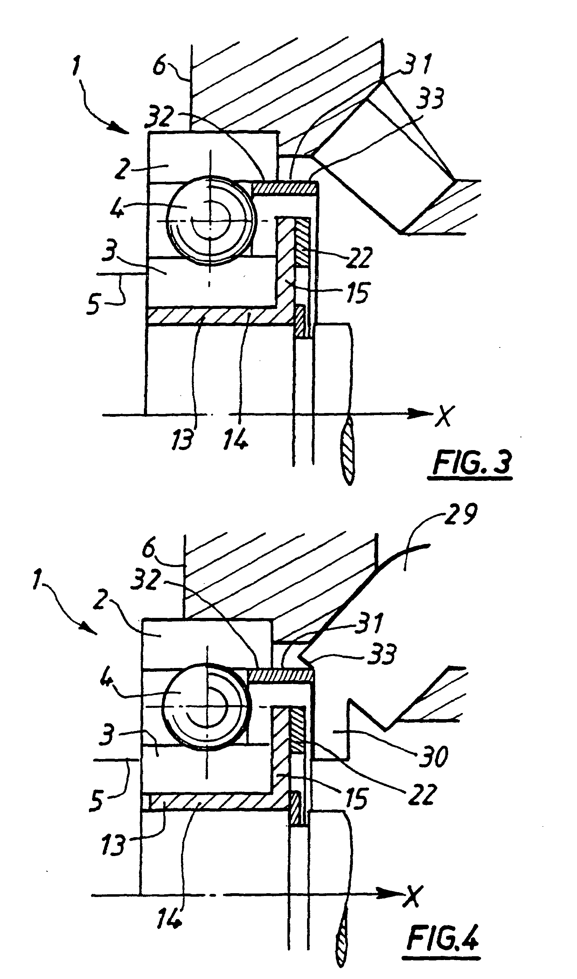

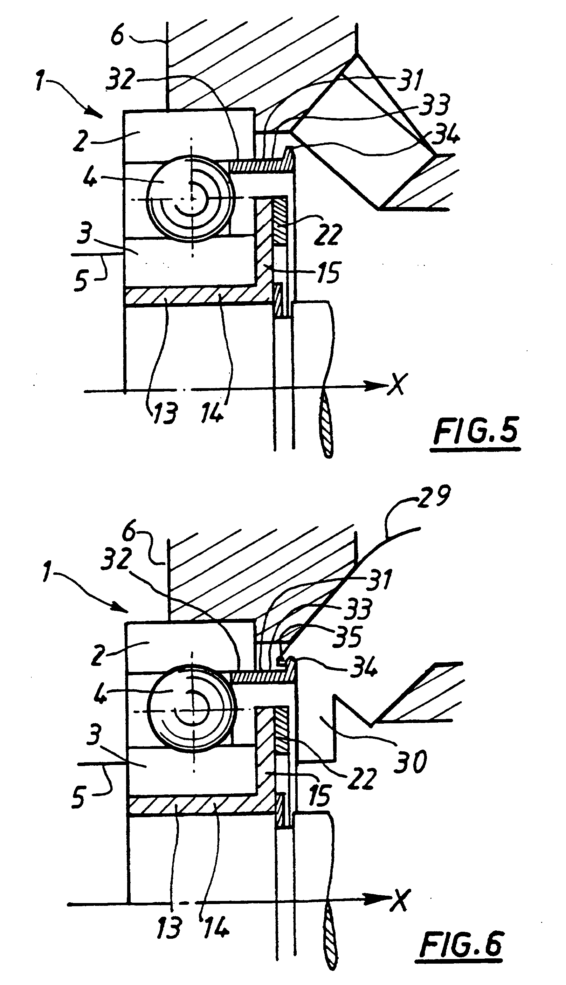

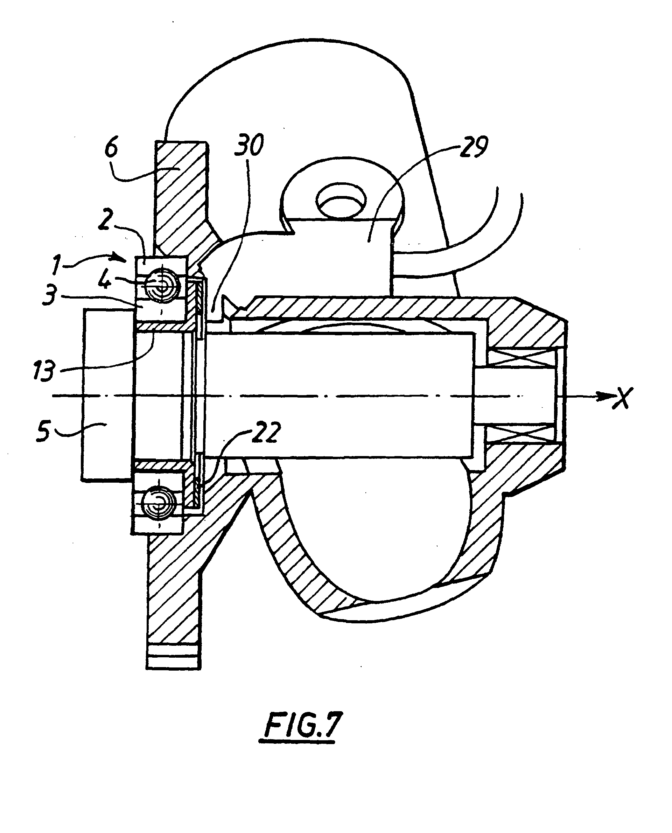

Dans une première variante de réalisation, illustrée sur les figures 3 à 7, est prévu un anneau cylindrique 31, réalisé dans un matériau rigide ou semi-rigide tel qu'un matériau métallique ou polymérique, dont une partie extrême arrière 32 au moins est emmanchée dans la bague extérieure 2.

Cet anneau 31 comporte une partie extrême avant 33 prévue pour être en appui contre le capteur 29 lorsque celui-ci est en fixé sur le carter 6. Cet appui permet de maintenir la partie de lecture 30 du capteur 29 à une distance voulue, prédéterminée du codeur 22. Une telle distance est dite entrefer.

En outre, l'anneau 31 peut comporter à proximité de sa partie extrême avant 33, une lèvre 34 saillant radialement vers l'extérieur de l'anneau 31, cette lèvre 34 étant complémentaire d'une griffe 35 prévue dans le capteur 29, et coopérant avec cette dernière.

Ainsi, une fois monté le capteur 29 sur le carter 6, le capteur 29 est encliqueté sur l'anneau 31 au moyen de la lèvre 34 et de la griffe 35, ce qui permet de maintenir constant l'entrefer en cours d'utilisation.

La position axiale de l'anneau 31 est par exemple réglable, pour permettre le réglage de la position du capteur 29 en appui sur celui-ci, et donc la distance séparant le capteur 29 du codeur 22.

Dans une deuxième variante de réalisation, illustrée sur la figure 2, est prévue une deuxième armature 36 associée à la bague extérieure 2 du roulement 1, comprenant une partie axiale 37 de forme cylindrique et une partie radiale 38 annulaire, en saillie vers l'intérieur.

La partie axiale 37 comprend une face externe 39, une face interne 40 et une extrémité axiale 41 libre, tandis que la partie radiale comprend une paroi avant 42, une paroi arrière 43 ainsi qu'une circonférence 44 libre.

Cette deuxième armature 36 peut être prévue pour être emmanchée dans un réceptacle 27 du carter 6, ce réceptacle 27 étant de forme complémentaire de la deuxième armature 36, la paroi avant 42 de la partie radiale 28 étant alors en appui contre une face d'appui 28 du réceptacle 27.

L'association de la deuxième armature 36 et de la bague extérieure 2 du roulement comprend une phase d'emmanchement de la deuxième armature 36 sur la bague extérieure 2, pour faire coopérer la surface externe 10 de la bague extérieure 2 et la face interne 40 de la partie axiale 37.

Une fois cet emmanchement réalisé, la paroi arrière 43 de la partie radiale 38 de l'armature 36 est en appui contre la face avant 11 de la bague extérieure 2 du roulement 1.

De la même manière que pour la première armature 13, afin d'éviter qu'en cours d'utilisation la bague extérieure 2 et la deuxième armature 36 ne se dissocient, l'association peut comprendre en outre une phase de sertissage qui consiste à déformer vers l'intérieur l'extrémité axiale 41 de l'armature en une pluralité de points, par exemple en trois points disposés à 120°.

Au lieu ou en plus d'une phase de sertissage, on peut envisager une phase de collage ou de soudure de la deuxième armature 36 sur la bague extérieure 2.

Dans cette variante, le capteur 29 est prévu pour être fixé par vissage, encliquetage ou analogue, sur la deuxième armature 36, par exemple contre la paroi avant 42 de la partie radiale 38, de manière à ce que sa partie de lecture 30 soit disposée en regard du codeur 22 avec un entrefer les séparant.

Bien que cette description ait été faite sur la base d'un roulement 1 à bague intérieure 3 tournante et bague extérieure 2 fixe, l'invention s'applique à un roulement 1 dont la bague intérieure est fixe et la bague extérieure tournante.

Dans ce cas, le codeur 22 peut être fixé par surmoulage ou analogue sur la deuxième armature 36 de la manière décrite ci-dessus, tandis que le capteur 29 peut être fixé sur la première armature 13 de la manière décrite précédemment, ou directement sur l'organe fixe.

## Revendications

1. Roulement (1) à codeur (22) incorporé comprenant :
- une bague fixe (2), une bague tournante (3) destinée à être montée sur un organe tournant (5), et des corps roulants (4) entre elles ; et
- un codeur (22) sous la forme d'un moyen annulaire générateur d'impulsions électromagnétiques ;
**caractérisé en ce qu'**il comprend en outre une armature (13) réalisée dans un matériau ferromagnétique, cette armature formant d'une part support du codeur (22) et d'autre part moyen de liaison rigide entre l'organe tournant (5) et la bague tournante (3), la bague tournante (3) étant emmanchée sur ce moyen, lequel est destiné à être interposé entre l'organe tournant (5) et la bague tournante (3).

2. Roulement (1) selon la revendication 1, **caractérisé en ce que** l'armature (13) comporte une partie axiale (14) cylindrique et une partie radiale (15) annulaire, la bague tournante (3) étant emmanchée sur la partie axiale (14) destinée elle-même à être emmanchée sur l'organe tournant (5), la bague tournante (3) venant contre la partie radiale (15), sur laquelle est fixé à l'opposé le codeur (22).

3. Roulement (1) selon la revendication 1 ou la revendication 2, **caractérisé par** l'absence de moyens d'étanchéité ou de moyens support de moyens d'étanchéité.

4. Roulement (1) selon l'une des revendications 1 à 3, **caractérisé en ce que** la bague tournante (3) du roulement (1) est associée à l'armature (13) par emmanchement à force.

5. Roulement (1) selon l'une des revendications 1 à 4, **caractérisé en ce que** la bague tournante (3) est associée à l'armature (13) par sertissage, encliquetage, collage, soudure.

6. Roulement (1) selon l'une des revendications 1 à 5, **caractérisé en ce que** l'armature (13) est réalisée par pliage d'une tôle à angle droit.

7. Roulement (1) selon l'une des revendications 2 à 6, **caractérisé en ce qu'**une dimension axiale de la partie axiale (14) de l'armature (13) est sensiblement égale à une dimension axiale de la bague tournante (3) du roulement (1).

8. Roulement (1) selon l'une des revendications 2 à 7, **caractérisé en ce qu'**une dimension radiale de la partie radiale (15) de l'armature (13) est sensiblement supérieure à une dimension radiale de la bague tournante (3).

9. Roulement (1) selon l'une des revendications 1 à 8, **caractérisé en ce que** le codeur (22) est une pièce annulaire réalisée dans un matériau synthétique chargé de particules de ferrite, et formé d'une pluralité de domaines contigus à direction d'aimantation inversée d'un domaine donné par rapport aux deux domaines qui lui sont contigus.

10. Roulement (1) selon l'une des revendications 1 à 9, **caractérisé en ce que** le codeur (22) est fixé à l'armature (13) par surmoulage.

11. Roulement (1) selon l'une des revendications 1 à 10, **caractérisé en ce que** le codeur (22) s'étend sur une paroi (19) de la partie radiale de l'armature, opposée à la bague tournante (3).

12. Roulement (1) selon l'une des revendications 1 à 11, **caractérisé en ce qu'**il ne comporte pas de capteur (29) ou de support de capteur intégré, le capteur (29) se présentant sous la forme d'un dispositif de détection des impulsions générées par le codeur (22), le capteur étant dissocié structurellement du roulement (1).

13. Roulement (1) selon la revendication 12, **caractérisé en ce que** qu'il comporte des moyens intégrés de positionnement du capteur (29), ces moyens étant portés par la bague fixe (2).

14. Roulement (1) selon la revendication 13, **caractérisé en ce que** les moyens de positionnement du capteur se présentent sous la forme d'un anneau (31) emmanché dans la bague fixe (2) du roulement (1).

15. Roulement (1) selon la revendication 13 ou la revendication 14, **caractérisé en ce que** les moyens de positionnement du capteur comprennent des moyens d'appui du capteur.

16. Roulement (1) selon l'une des revendications 13 à 15, **caractérisé en ce que** les moyens de positionnement du capteur comprennent des moyens d'encliquetage du capteur.

17. Roulement (1) selon l'une des revendications 1 à 11 comprenant en outre un capteur (29) se présentant sous la forme d'un dispositif de détection des imposions générées par le codeur (22), et des moyens de support intégrés, du capteur (29).

18. Roulement (1) selon la revendication 17, **caractérisé en ce que** le capteur (29) est associé à la bague fixe (2) par l'intermédiaire d'une deuxième armature (36), formant d'une part moyens de support du capteur (29), et d'autre part moyen de liaison rigide entre la bague fixe (2) et un organe fixe (6).

19. Roulement (1) selon la revendication 18, **caractérisé en ce que** la deuxième armature (36) comporte une partie axiale (37) cylindrique et une partie radiale (38) annulaire, la partie axiale (37) étant d'une part emmanchée sur la bague fixe (2), et d'autre part destinée à être emmanchée sur l'organe fixe (6), la bague fixe (2) venant contre la partie radiale, (38) sur laquelle est fixé à l'opposé le capteur (29).

20. Roulement (1) selon la revendication 19 **caractérisé en ce que** la deuxième armature (36) est associée à la bague fixe (2) par emmanchement à force.

21. Roulement (1) selon la revendication 19 ou la revendication 20, **caractérisé en ce que** la deuxième armature (36) est associée à la bague fixe (2) par sertissage, encliquetage, collage, soudure.

22. Roulement (1) selon l'une des revendications 12 à 21, **caractérisé en ce que** le capteur (29) comprend au moins un élément sensible disposé en regard du codeur (22), choisi dans le groupe comprenant les sondes à effet Hall, les magnétorésistances.

23. Roulement (1) selon la revendication 22, **caractérisé en ce que** le capteur (29) comprend une pluralité d'éléments sensibles alignés.

24. Ensemble comprenant un roulement (1) selon l'une des revendications 1 à 16, et un capteur (29) se présentant sous la forme d'un dispositif de détection des impulsions générées par le codeur (22), ce capteur (29) étant porté par un organe fixe (6).

25. Ensemble comprenant un roulement (1) selon la revendication 15, et un capteur (29) se présentant sous la forme d'un dispositif de détection des impulsions générées par le codeur (22), ce capteur (29) étant porté par un organe fixe (6), et en appui sur les moyens d'appui.

26. Ensemble comprenant un roulement (1) selon la revendication 16, et un capteur (29) se présentant sous la forme d'un dispositif de détection des impulsions générées par le codeur (22), ce capteur (29) étant porté par un organe fixe (6), et encliqueté sur les moyens d'encliquetage.

27. Ensemble selon l'une des revendications 24 à 26, **caractérisé en ce que** le capteur (29) comprend au moins un élément sensible disposé en regard du codeur (22), choisi dans le groupe comprenant les sondes à effet Hall, les magnétorésistances.

28. Ensemble selon la revendication 27, **caracterisé en ce que** le capteur (29) comprend une pluralité d'éléments sensibles alignés.

29. Système de direction d'un véhicule, comprenant un arbre de direction, une colonne de direction et éventuellement un boîtier de crémaillère, **caractérisé en ce qu'**il comprend en outre un roulement (1) selon l'une des revendications 1 à 23 ou un ensemble selon l'une des revendications 24 à 28, interposé entre l'arbre de direction et la colonne de direction, ou entre l'arbre de direction et le boîtier de crémaillère.

## Patentansprüche

1. Wälzlager (12) mit eingebautem Kodierer (22), bestehend aus:
- einem feststehenden Ring (2), einem Drehring (3), der dazu bestimmt ist, auf ein umlaufendes Organ (5) montiert zu werden, und aus gegeneinander wälzenden Rollkörpern (4);
- einem Kodierer (22) in Form einer ringförmigen Vorrichtung, die elektromagnetische Impulse erzeugt;
**dadurch gekennzeichnet, dass** es ferner aus einem aus ferromagnetischem Material hergestellten Gestell (13) besteht, wobei dieses Gestell zum einen die Halterung des Kodierers (22) und zum anderen eine steife Verbindung zwischen dem umlaufendes Organ (5) und dem Drehring (3) bildet, wobei der Drehring (3) auf diese zwischen umlaufendes Organ (5) und Drehring (3) zu montierende Vorrichtung gepresst wird.

2. Wälzlager (1) gemäß Anspruch 1, **dadurch gekennzeichnet, dass** das Gestell (13) aus einem zylindrischen Axialteil (14) und einem ringförmigen Radialteil (15) besteht, wobei der Drehring (3) auf dem Axialteil (14) aufsitzt, welcher wiederum dazu bestimmt ist, auf das umlaufende Organ (5) gepresst zu werden, wobei der Drehring (3) am Radialteil (15) anliegt, auf welchem auf der entgegengesetzten Seite der Kodierer (22) befestigt ist.

3. Wälzlager (1) gemäß Anspruch 1 oder Anspruch 2, das durch das Fehlen einer Dichtungsvorrichtung oder einer Halterung für die Dichtungsvorrichtung gekennzeichnet ist.

4. Wälzlager (1) gemäß Anspruch 1 bis 3, **dadurch gekennzeichnet, dass** der Drehring (3) des Wälzlagers (1) mit dem Gestell (13) über eine Längspresspassung verbunden ist.

5. Wälzlager (1) gemäß Anspruch 1 bis 4, **dadurch gekennzeichnet, dass** der Drehring (3) mit dem Gestell (13) durch Falzen, Einrasten, Kleben oder Schweißen verbunden ist.

6. Wälzlager (1) gemäß Anspruch 1 bis 5, **dadurch gekennzeichnet, dass** das Gestell (13) durch Biegen eines Blechs im rechten Winkel hergestellt wurde.

7. Wälzlager (1) gemäß einem der Ansprüche 2 bis 6, **dadurch gekennzeichnet, dass** eine axiale Abmessung des Axialteils (14) des Gestells (13) fast genauso groß ist, wie eine axiale Abmessung des Drehrings (3) des Wälzlagers (1).

8. Wälzlager (1) gemäß einem der Ansprüche 2 bis 7, **dadurch gekennzeichnet, dass** eine radiale Abmessung des Radialteiles (15) des Gestells (13) etwas größer als die radiale Abmessung des Drehrings (3) ist.

9. Wälzlager (1) gemäß einem der Ansprüche 1 bis 8, **dadurch gekennzeichnet, dass** der Kodierer (22) ein aus einem synthetischen Material mit Ferritteilchen gefertigtes ringförmiges Stück ist, und aus einer Vielzahl aneinandergrenzender Domänen besteht, wobei eine bestimmte Domäne die entgegengesetzte Magnetisierungsrichtung aufweist wie die beiden angrenzenden Domänen.

10. Wälzlager (1) gemäß einem der Ansprüche1 bis 9, **dadurch gekennzeichnet, dass** der Kodierer (22) am Gestell (13) durch Umhüllung befestigt ist.

11. Wälzlager (1) gemäß einem der Ansprüche1 bis 10, **dadurch gekennzeichnet, dass** sich der Kodierer (22) an einer Wandung (19) des Radialteils des Gestells gegenüber dem Drehring befindet.

12. Wälzlager (1) gemäß einem der Ansprüche 1 bis 11, **dadurch gekennzeichnet, dass** es keinen Sensor (29) und keine eingebaute Sensorhalterung enthält, da der Sensor (29) eine Vorrichtung ist, welche die vom Kodierer (22) erzeugten Impulse erfasst und strukturell nicht mit dem Wälzlager (1) verbunden ist.

13. Wälzlager (1) gemäß Anspruch 12, **dadurch gekennzeichnet, dass** es Vorrichtungen zur Positionierung des Sensors (29) aufweist, wobei diese Vorrichtungen vom feststehenden Ring (2) getragen werden.

14. Wälzlager (1) gemäß Anspruch 13, **dadurch gekennzeichnet, dass** die Positionierungsvorrichtung des Sensors ein auf den feststehenden Ring (2) des Wälzlagers (1) gepresster Ring (31) ist.

15. Wälzlager (1) gemäß Anspruch 13 oder Anspruch 14, **dadurch gekennzeichnet, dass** die Positionierungsvorrichtungen des Sensors Auflagevorrichtungen für den Sensor aufweisen.

16. Wälzlager (1) gemäß einem der Ansprüche 13 bis 15, **dadurch gekennzeichnet, dass** die Positionierungsvorrichtungen des Sensors Einrastvorrichtungen für den Sensor aufweisen.

17. Wälzlager (1) gemäß einem der Ansprüche1 bis 11, das ferner einen Sensor (29) in Form einer Vorrichtung zur Erfassung der vom Kodierer (22) erzeugten Impulse und eine eingebaute Halterungsvorrichtungen für den Sensor aufweist.

18. Wälzlager (1) gemäß Anspruch 17, **dadurch gekennzeichnet, dass** der Sensor (29) mit dem feststehenden Ring (2) über ein zweites Gestell (36) verbunden ist, welches zum einen als Halterung für den Sensor (29) dient und zum andem eine steife Verbindung zwischen dem feststehenden Ring (2) und einem feststehenden Organ (6) bildet.

19. Wälzlager (1) gemäß Anspruch 18, **dadurch gekennzeichnet, dass** das zweite Gestell (36) einen zylindrischen Axialteil (37) und einen ringförmigen Radialteil (38) aufweist, wobei der Radialteil (37) zum einen auf den feststehenden Ring (2) gepresst wird, und zum andern dazu dient, auf das feststehende Organ (6) gepresst zu werden, wobei der feststehende Ring (2) am Radialteil (38) anliegt, auf welchem auf der entgegengesetzten Seite der Sensor (29) befestigt ist.

20. Wälzlager (1) gemäß Anspruch 19, **dadurch gekennzeichnet, dass** das zweite Gestell (36) durch Längspresspassung mit dem feststehenden Ring (2) verbunden ist.

21. Wälzlager (1) gemäß Anspruch 19 oder Anspruch 20, **dadurch gekennzeichnet, dass** das zweite Gestell (36) mit dem feststehenden Ring (2) durch Falzen, Einrasten, Kleben oder Schweißen verbunden ist.

22. Wälzlager (1) gemäß einem der Ansprüche 12 bis 21, **dadurch gekennzeichnet, dass** der Sensor (29) mindestens aus einem gegenüber dem Kodierer (22) angebrachten Fühler besteht, und aus der Gruppe der Hall-Sonden und Magnetwiderstände ausgewählt wurde.

23. Wälzlager (1) gemäß Anspruch 22, **dadurch gekennzeichnet, dass** der Sensor (29) eine Vielzahl aneinander gereihter Fühler aufweist.

24. Einheit, die aus einem Wälzlager (1) gemäß einem der Ansprüche 1 bis 16 besteht und aus einem Sensor (29) in Form einer Vorrichtung zur Erfassung der vom Kodierer (22) erzeugten Impulse, wobei dieser Sensor (29) von einem feststehenden Organ (6) getragen wird.

25. Einheit, die aus einem Wälzlager (1) gemäß Anspruch 15 besteht, und einem Sensor (29) in Form einer Vorrichtung zur Erfassung der vom Kodierer (22) erzeugten Impulse, wobei dieser Sensor (29) von einem feststehenden Organ (6) getragen wird und auf den Auflagevorrichtungen aufliegt.

26. Einheit, die aus einem Wälzlager (1) gemäß Anspruch 16 besteht, und einem Sensor (29) in Form einer Vorrichtung zur Erfassung der vom Kodierer (22) erzeugten Impulse, wobei dieser Sensor (29) von einem feststehenden Organ (6) getragen wird und auf Einrastvorrichtungen eingerastet ist.

27. Einheit gemäß einem der Ansprüche 24 bis 26, **dadurch gekennzeichnet, dass** der Sensor (29) mindestens aus einem gegenüber dem Kodierer (22) angebrachten Fühler besteht, das aus der Gruppe der Hall-Sonden und Magnetwiderstände ausgewählt wurde.

28. Einheit gemäß Anspruch 27, **dadurch gekennzeichnet, dass** der Sensor (29) eine Vielzahl aneinander gereihter Fühler aufweist.

29. Lenksystem eines Fahrzeugs, das eine Lenkwelle, eine Lenksäule und eventuell ein Zahnstangengehäuse aufweist, **dadurch gekennzeichnet, dass** es ferner ein Wälzlager (1) gemäß einem der Ansprüche 1 bis 23 oder eine Einheit gemäß einem der Ansprüche 24 bis 28 aufweist und zwischen die Lenkwelle und die Lenksäule oder zwischen die Lenkwelle und das Zahnstangengehäuse montiert wird.

## Claims

1. A bearing element (1) with built-in coder (22) comprising:
- a fixed race (2), a rotating race (3) intended to be mounted on a rotating member (5), and bodies (4) rolling on each other; and
- a coder (22) in the form of an annular means generating electromagnetic pulses;
**characterised in that** it also comprises a frame (13) produced from a ferromagnetic material, the frame (13) forming on the one hand a support for the coder (22) and on the other hand a rigid connection means between the rotating member (5) and the rotating race (3), the rotating race (3) being fitted on the latter, which is intended to be interposed between the rotating member (5) and the rotating race (3).

2. A bearing element (1) according to Claim 1, **characterised in that** the frame (13) has a cylindrical axial part (14) and an annular radial part (15), the rotating race (3) being fitted on the axial part (14) itself intended to be fitted on the rotating member (5), the rotating race (3) coming against the radial part (15), to which the coder (22) is fixed opposite.

3. A bearing element (1) according to Claim 1 or Claim 2, **characterised by** the absence of sealing means or means supporting sealing means.

4. A bearing element (1) according to one of Claims 1 to 3, **characterised in that** the rotating race (3) of the bearing element (1) is associated with the frame (13) by force-fitting.

5. A bearing element (1) according to one of Claims 1 to 4, **characterised in that** the rotating ring (3) is associated with the frame (13) by crimping, snapping on, adhesive bonding, welding.

6. A bearing element (1) according to one of Claims 1 to 5, **characterised in that** the frame (13) is produced by folding a metal sheet at right angles.

7. A bearing member (1) according to one of Claims 2 to 6, **characterised in that** an axial dimension of the axial part (14) of the frame (13) is substantially equal to an axial dimension of the rotating race (3) of the bearing element (1) .

8. A bearing element (1) according to one of Claims 2 to 7, **characterised in that** a radial dimension of the radial part (15) of the frame (13) is substantially greater than a radial dimension of the rotating race (3).

9. A bearing element (1) according to one of Claims 1 to 8, **characterised in that** the coder (22) is an annular part produced from a synthetic material containing ferrite particles, and formed from a plurality of contiguous areas with a direction of magnetisation which is reversed in a given area with respect to the two areas which are contiguous with it.

10. A bearing element (1) according to one of Claims 1 to 9, **characterised in that** the coder (22) is fixed to the frame (13) by overmoulding.

11. A bearing element (1) according to one of Claims 1 to 10, **characterised in that** the coder (22) extends over a wall (19) of the radial part of the frame, opposite the rotating race (3).

12. A bearing element (1) according to one of Claims 1 to 11, **characterised in that** it does not have a sensor (29) or integrated sensor support, the sensor (29) being in the form of a device for detecting pulses generated by the coder (22), the sensor being structurally separate from the bearing element (1).

13. A bearing element (1) according to Claim 12, **characterised in that** it has integrated means of positioning the sensor (29), these means being carried by the fixed race (2).

14. A bearing element (1) according to Claim 13, **characterised in that** the sensor positioning means are in the form of a ring (31) fitted in the fixed race (2) of the bearing element (1).

15. A bearing element (1) according to Claim 14 or Claim 14, **characterised in that** the sensor positioning means comprise means of supporting the sensor.

16. A bearing element according to one of Claims 13 to 15, **characterised in that** the sensor positioning means comprise means of snapping on the sensor.

17. A bearing element (1) according to one of Claims 1 to 11 also comprising a sensor (29) in the form of a device for detecting pulses generated by the coder (22), and integrated support means for the sensor (29).

18. A bearing element (1) according to Claim 17, **characterised in that** the sensor (29) is associated with the fixed race (2) by means of a second frame (36), forming on the one hand means of support for the sensor (29) and on the other hand rigid connection means between the fixed race (2) and a fixed member (6).

19. A bearing member (1) according to Claim 18, **characterised in that** the second frame (36) has a cylindrical axial part (37) and an annular radial part (38), the axial part (37) being on the one hand fitted on the fixed race (2) and on the other hand intended to be fitted on the fixed member (6), the fixed race (2) coming against the radial part (38) to which the sensor (29) is fixed opposite.

20. A bearing element (1) according to Claim 19, **characterised in that** the second frame (36) is associated with the fixed race (2) by force-fitting.

21. A bearing (1) according to Claim 19 or Claim 20, **characterised in that** the second frame (36) is associated with the fixed race (2) by crimping, snapping on, adhesive bonding, welding.

22. A bearing member (1) according to one of Claims 12 to 21, **characterised in that** the sensor (29) comprises at least one sensitive element disposed opposite the coder (22), chosen from the group comprising Hall effect sensors and magnetoresistors.

23. A bearing element (1) according to Claim 22, **characterised in that** the sensor (29) comprises a plurality of aligned sensitive elements.

24. An assembly comprising a bearing element (1) according to one of Claims 1 to 16, and a sensor (29) in the form of a device for detecting pulses generated by the coder (22), this sensor (29) being carried by a fixed member (6).

25. An assembly comprising a bearing element (1) according to Claim 15, and a sensor (29) in the form of a device for detecting pulses generated by the coder (22), this sensor (29) being carried by a fixed member (6) and in abutment on the abutment means.

26. An assembly comprising a bearing element (1) according to Claim 16, and a sensor (29) in the form of a device for detecting pulses generated by the coder (22), this sensor (29) being carried by a fixed member (6) and snapped onto the snapping-on means.

27. An assembly according to one of Claims 24 to 26, **characterised in that** the sensor (29) comprises at least one sensitive element disposed opposite the coder (22), chosen from the group comprising Hall effect sensors and magnetoresistors.

28. An assembly according to Claim 27, **characterised in that** the sensor (29) comprises a plurality of aligned sensitive elements.

29. A vehicle steering system, comprising a steering shaft, a steering column and possibly a rack housing, **characterised in that** it also comprises a bearing element (1) according to one of Claims 1 to 23 or an assembly according to one of Claims 24 to 28, interposed between the steering shaft and the steering column, or between the steering shaft and the rack housing.
